# FASCICULE DE BREVET EUROPEEN

(11) **EP 1 512 127 B1**
(45) Date de publication et mention de la délivrance du brevet: **22.12.2010**
(21) Numéro de dépôt: 03727791.0
(22) Date de dépôt: 23.05.2003
(51) Int. Cl.: G08C 19/28, H04B 1/20

(54) **DISPOSITIF DE COMMANDE D'UN EQUIPEMENT ET PROCEDE DE CONFIGURATION DUDIT SYSTÈME**
STEUERVORRICHTUNG EINES GERÄTS UND VERFAHREN ZUR KONFIGURATION DES GERÄTS
EQUIPMENT CONTROL DEVICE AND METHOD FOR THE CONFIGURATION SAID DEVICE

(30) Priorité: 11.06.2002 FR 0207146
(43) Date de publication de la demande: 09.03.2005
(73) Titulaire: SIMU, 70100 Arc-Les-Gray (FR)
(72) Inventeur: PELLARIN, Florent, F-74000 Annecy (FR)
(74) Mandataire: Bugnion Genève
(86) Numéro de dépôt international: PCT/IB2003/002214
(87) Numéro de publication internationale: WO 2003/105103

(56) Documents cités:
- WO-A-02/058015
- US-A- 5 959 539

## Description

La présente invention se rapporte au domaine de la commande d'un équipement électrique de protection et/ou de confort dans un bâtiment. Elle concerne en particulier un procédé de configuration d'un dispositif de commande d'un équipement comprenant un émetteur d'ordres et un récepteur d'ordres pilotant l'équipement. Elle concerne encore un dispositif pour la mise en oeuvre d'un tel procédé.

Par émetteur d'ordres, on entend, dans tout ce document, toute interface permettant à un utilisateur d'envoyer un ordre vers un récepteur d'ordres pilotant un équipement.

Par ergonomie, on entend, dans tout ce document, une manipulation d'une ou plusieurs touches d'un clavier d'un émetteur d'ordres selon une séquence et/ou une durée déterminée.

La multiplication des fabricants d'équipements électriques divers et la multiplication des produits à commander au sein même d'un même métier sont à l'origine de l'existence d'un grand nombre d'ergonomies d'émetteurs différentes. Ceci a pour conséquences pour les fabricants d'émetteurs d'ordres une très coûteuse multiplication des références à proposer et une dispersion des volumes de production sur ces différentes références.

On connaît de l'art antérieur des inventions permettant de remédier à ces inconvénients. Elles proposent des dispositifs, tels que des télécommandes dites universelles, permettant qu'un même circuit d'émetteur d'ordres puisse piloter une grande variété de produits.

Ces télécommandes sont principalement apparues dans le domaine du contrôle d'appareils domestiques de type téléviseurs, magnétoscopes et autres.

Dans un premier groupe de réalisations, l'émetteur d'ordres contient en mémoire les différents jeux de commandes possibles. Le brevet US 6,225,938 décrit par exemple un émetteur d'ordres muni d'un lecteur de code barres permettant de lire une référence codée sur chaque appareil à commander, relative à ce type d'appareil et/ou à son protocole de commande. Le processeur interne à l'émetteur d'ordres contient une base de données relatives aux différents protocoles connus et configure l'émetteur d'ordres, c'est-à-dire la relation entre les touches du clavier et les commandes émises, en fonction du type d'appareil.

Le brevet US 5,614,906 décrit également une télécommande contenant une base de données contenant différents jeux de commandes relatifs aux appareils connus sur le marché. Cette fois, la mise en relation des touches de clavier avec la bonne commande est effectuée par essai-erreur: la validation a lieu lorsque la touche pressée produit bien l'effet observable attendu.

Dans un deuxième groupe de réalisations, l'émetteur d'ordres est capable de recevoir, depuis le récepteur d'ordres, un jeu complet de commandes relatives à ce récepteur. Ces commandes sont affectées aux touches de l'émetteur d'ordres ou apparaissent sous forme de liste ou d'icônes sur un écran de l'émetteur d'ordre. La sélection d'une commande se fait alors par pression sur l'écran tactile ou déplacement d'un curseur sur la liste.

On trouve un tel mode de réalisation dans le brevet US 5,909,183 et un mode similaire dans la demande WO 01/71685, ce dernier s'appliquant explicitement non seulement aux téléviseurs, magnétoscopes et autres produits domestiques, mais aussi à des applications de type éclairage.

L'accent est mis sur l'aspect interactif de telles commandes. Cette interactivité est notamment utilisée dans le brevet US 4,746,919 qui s'attache à faciliter l'usage de télécommandes universelles utilisables pour la commande de produits à l'aide de touches multifonctions. Un écran décrit la fonction des différentes touches à un instant donné. La nouveauté provient de ce que le jeu de commandes et leur explication fonctionnelle sont transmis par le récepteur d'ordres de l'appareil à commander à la télécommande, en fonction du contexte et de l'état du récepteur à un instant donné, c'est à dire en fonction de l'avancement de l'algorithme de contrôle de sélection d'un appareil, puis de commande dudit appareil, comme cela se produit dans le cheminement dans des menus déroulants.

Dans un tout autre domaine, on connaît, de la demande WO 02/058015, un procédé de configuration d'options offertes par un terminal en fonction de l'utilisateur, le profil de celui-ci étant reconnu par le biais de son téléphone mobile ou de son assistant électronique. Ce procédé permet un gain de temps pour l'utilisateur du terminal: grâce à la reconnaissance anticipée de celui-ci, le terminal affiche un menu tenant compte de son identité et éventuellement une offre d'interconnexion entre le terminal et le téléphone mobile ou l'assistant électronique, permettant par exemple de transmettre données bancaires.

Les dispositifs de commande décrits précédemment présentent des inconvénients. Ils mettent en oeuvre des technologies relativement compliquées ou coûteuses telles que des dispositifs de lecture de codes barres ou des dispositifs d'affichage de listes ou d'icônes.

Le but de l'invention est la mise en oeuvre d'un procédé de configuration d'un dispositif de commande d'un équipement électrique palliant ces inconvénients. L'invention se propose en particulier de réaliser un dispositif de commande simple permettant de commander, avec un même circuit d'émission d'ordres, des équipements plus ou moins complexes.

Le procédé de configuration selon l'invention est caractérisé par la partie caractérisante de la revendication 1.

Les revendications 2 à 4 définissent des modes d'exécution du procédé.

Le dispositif de commande pour la mise en oeuvre d'un tel procédé est défini par les revendications 5 à 8.

Le dessin annexé représente, à titre d'exemples, deux modes d'exécution du procédé selon l'invention ainsi que les dispositifs de commande permettant leur mise en oeuvre.
La figure 1 est un schéma d'un dispositif émetteur-récepteur permettant la mise en oeuvre du procédé selon un premier mode d'exécution.
La figure 2 est un schéma d'un dispositif émetteur-récepteur permettant la mise en oeuvre du procédé selon un deuxième mode d'exécution.
La figure 3 est un schéma d'un émetteur muni de quatre touches.
La figure 4 est ordinogramme du procédé de configuration d'un dispositif de commande selon un premier mode d'exécution.
La figure 5 est ordinogramme du procédé de configuration d'un dispositif de commande selon un deuxième mode d'exécution.

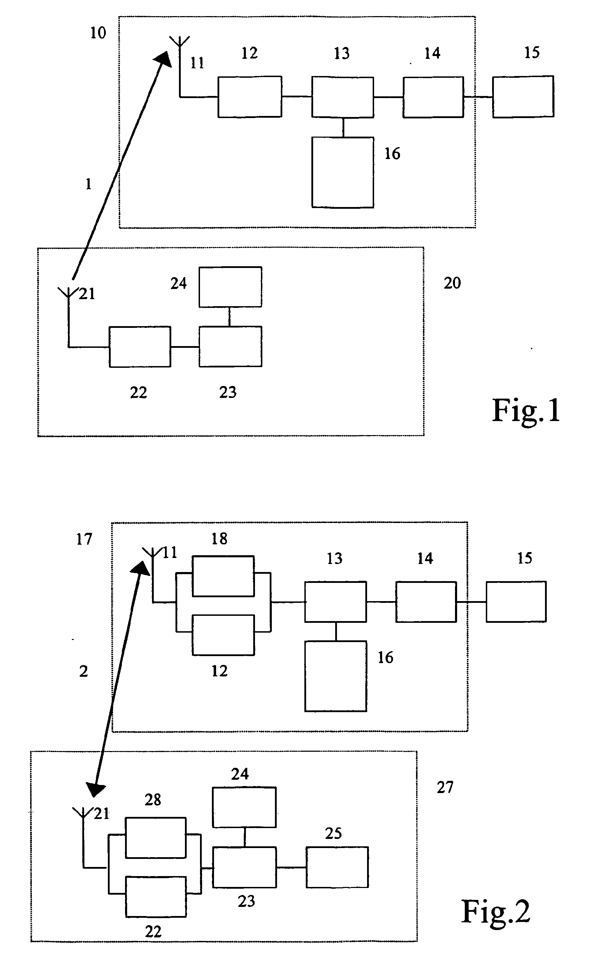

L'ensemble émetteur d'ordres 20, récepteur d'ordres 10 et équipement 15 représenté à la figure 1 permet l'exécution du procédé de configuration selon un premier mode d'exécution. Le récepteur d'ordres 10 contient un récepteur radiofréquences 12 raccordé à un dispositif de couplage de type antenne 11 d'une part, et à une unité de traitement 13 de type microprocesseur ou microcontrôleur, d'autre part. Cette unité de traitement 13 pilote un actionneur 14 dont l'alimentation électrique n'est pas représentée. L'actionneur 14 agit sur un équipement 15 tel qu'un store, une porte, un volet roulant, un radiateur de chauffage ou un dispositif de climatisation.

Bien que l'unité de traitement 13 soit préférentiellement un microcontrôleur, qui intègre une zone mémoire, on a représenté ici, de manière séparée, une mémoire 16 destinée à contenir un programme et une base de données relatifs à une liste de commandes correspondant aux ergonomies de l'émetteur d'ordres.

L'émetteur d'ordres 20 comprend une antenne 21, un émetteur radiofréquences 22, une unité de traitement 23 de type microcontrôleur et un moyen de saisie de type clavier 24.

La communication unidirectionnelle, représentée par la flèche 1, entre l'émetteur d'ordres 20 et le récepteur d'ordres 10 se fait par ondes électromagnétiques.

Il est à noter que la communication peut encore se faire par le biais de courants porteurs, auquel cas l'antenne 11 est remplacée par un dispositif de couplage inductif ou capacitif avec le secteur et le récepteur 12 est adapté pour travailler selon les fréquences et le protocole correspondant. Il en est de même dans le cas d'une liaison de type bus filaire.

Le récepteur d'ordres 10 peut communiquer avec un ou plusieurs émetteurs d'ordres et/ou avec des unités capteurs.

L'ensemble émetteur d'ordres 27, récepteur d'ordres 17 et équipement 15 représenté à la figure 2 permet l'exécution du procédé de configuration selon un deuxième mode d'exécution. Il diffère de l'ensemble précédemment décrit en ce que le récepteur d'ordres 17 comprend un émetteur radiofréquences 18 et en ce que l'émetteur d'ordres 27 comprend un récepteur radiofréquences 28. L'émetteur d'ordres 27 comprend de plus une mémoire 25 destinée à contenir une liste de commandes exécutables par le récepteur d'ordres 17.

La communication, représentée par la flèche 2, entre l'émetteur d'ordres 27 et le récepteur d'ordres 17 est bidirectionnelle et se fait par ondes électromagnétiques ou par tout autre moyen mentionné plus haut.

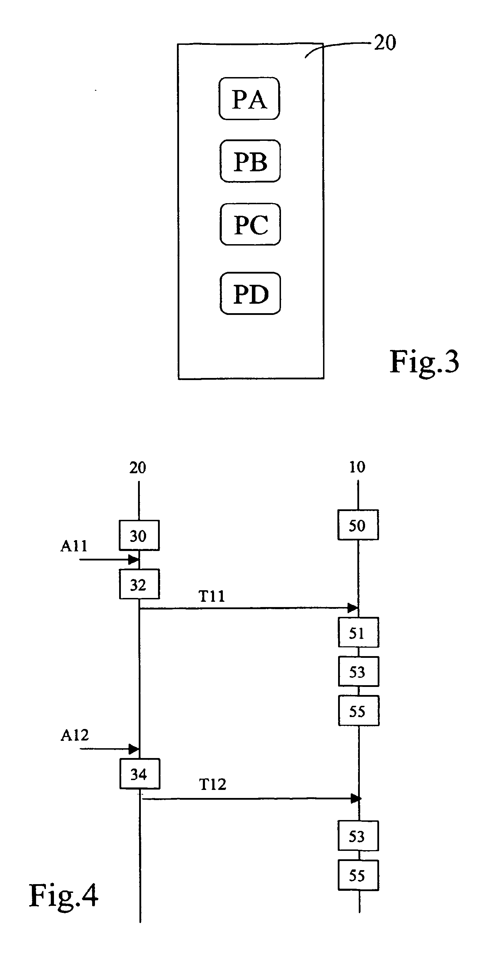

Afin d'expliquer le principe du procédé de configuration selon l'invention, on considère le cas d'une télécommande à quatre boutons poussoirs PA, PB, PC, PD, telle que représentée à la figure 3.

Dans une application d'éclairage comportant deux luminaires L1 et L2 , les boutons poussoirs se voient, par exemple, affecter les significations suivantes :
Appui sur PA = allumer L1
Appui sur PB = éteindre L1
Appui sur PC = allumer L2
Appui sur PD = éteindre L2

Pour une installation d'éclairage comprenant des luminaires à gradateur, il est logique de différencier un appui court ou un appui prolongé sur ces mêmes touches. Dans le cas d'un appui court, les commandes à envoyer sont les précédentes, tandis que dans le cas d'un appui prolongé, elles deviennent :
Appui sur PA = augmenter intensité L1
Appui sur PB = diminuer intensité L1
Appui sur PC = augmenter intensité L2
Appui sur PD = diminuer intensité L2

Dans ce cas particulier, on se trouve donc avec deux ergonomies différentes par touche, soit un total de huit ergonomies permettant de provoquer huit commandes différentes.

On peut aussi combiner des appuis. Par exemple, prévoir que l'appui simultané sur PA et PC couple les deux luminaires (ils répondent alors simultanément à toute commande) tandis qu'un appui simultané sur PB et PD dissocie ces luminaires. On peut aussi prévoir que l'appui simultané sur PA et PB est un ordre d'enregistrement dans une première mémoire des niveaux d'intensité lumineuse affectés aux luminaires L1 et L2 pour définir un premier scénario d'éclairage, alors que l'appui simultané sur PC et PD permet de définir un deuxième scénario d'éclairage.

Le même boîtier d'émetteur ou un boîtier en apparence différent, mais conçu à partir du même circuit électronique d'émetteur peut aussi bien être destiné à commander le mouvement d'une protection solaire. Par exemple, on peut très bien ne retenir que trois touches fonctionnelles principales, PA, PB, PC, auxquelles on associe plusieurs ergonomies relatives à des appuis courts sur les touches, des appuis longs et des appuis simultanés sur deux des touches.

Ces touches sont alors communément disposées sur une même ligne verticale : la touche supérieure correspondant à l'ordre de montée, la touche inférieure à l'ordre de descente et la touche intermédiaire à l'ordre d'arrêt. Les variantes d'ergonomies dans ce cas seront détaillées par la suite.

Le tableau 1 donne un exemple de table d'ergonomies. Une telle table définit un code d'ergonomie E(i) relatif à chaque séquence d'appui sur les touches de l'émetteur d'ordres. Cette table est définie par un constructeur ou de manière préférée, par un ensemble de constructeurs d'émetteurs d'ordres en concertation avec les constructeurs de récepteurs d'ordres.

**Tableau 1**

| Code d'ergonomie | Séquence d'appui sur les touches |
|---|---|
| E(00) | PA court |
| E(01) | PB court |
| E(02) | PC court |
| E(03) | PD court |
| E(04) | PA long |
| E(05) | PB long |
| E(06) | PC long |
| E(07) | PD long |
| E(08) | PA & PB |
| E(09) | PB & PC |
| E(10) | PC & PD |

La définition d'une telle table est d'autant plus facile que le nombre de touches du clavier est faible, mais il est utile de prévoir une table détaillant le plus grand nombre d'ergonomies, afin de faire face à des besoins futurs.

Dans l'exemple, on se limite à quatre touches PA, PB, PC, PD. A chaque ergonomie est affecté un code d'ergonomie. Il ne s'agit ici que d'un début de table. On pourrait, par exemple, y ajouter des appuis consécutifs sur une même touche ou des appuis très longs.

Cette table existe au moins sous forme de document partagé entre constructeurs d'émetteurs d'ordres et de récepteurs d'ordres. Il n'est pas nécessaire qu'elle soit implantée dans l'émetteur d'ordres.

Cependant, l'émetteur d'ordres contient, selon l'invention, au moins une information relative aux ergonomies validées par le fabricant de l'émetteur d'ordres. Cette information peut être logée dans une mémoire de manière permanente ou réinscriptible par une procédure particulière ou encore être déduite d'une caractéristique physique, par exemple d'une configuration de contacts modifiable sur le circuit imprimé et lisible par le microcontrôleur sans avoir à être stockée en mémoire.

Cette information est par exemple un code ES(j) représentatif du sous-ensemble d'ergonomies disponibles dans cet émetteur d'ordres.

Le tableau 2 donne un exemple de table constructeur associant les codes ES aux ergonomies précédentes. De nouveau, la définition de chaque code ES résulte d'une concertation entre constructeurs ou du libre choix d'un constructeur réalisant à la fois des émetteurs et des récepteurs d'ordres.

**Tableau 2**

| Code d'ergonomie | ES0 | ES1 | ES2 | ES3 | ES4 | ES5 |
|---|---|---|---|---|---|---|
| E(00) | x | x | x | x | x | x |
| E(01) | x | x | x | x | x | x |
| E(02) | x | x | x | x | x | x |
| E(03) | | x | | x | | x |
| E(04) | | | x | x | | x |
| E(05) | | | x | x | | x |
| E(06) | | | x | x | | x |
| E(07) | | | | x | | x |
| E(08) | x | | x | | x | x |
| E(09) | x | | x | | x | x |
| E(10) | | | | | x | x |

Ainsi, apparaît un intérêt de l'invention déjà recherché dans des applications de l'art antérieur : le même circuit imprimé (ou au moins le même microcontrôleur) et le même logiciel peuvent être implantés dans divers émetteurs d'ordres sur lesquels est utilisé un nombre de touches différent.

De manière plus commerciale, il devient ainsi possible d'affecter des droits plus ou moins étendus à un même circuit d'émetteur d'ordres, simplement par modification de bandes sécables sur ce circuit. D'une façon simple, les codes ES peuvent directement correspondre à la présence ou à l'absence de tels contacts électriques.

Les tableaux 3 et 4 sont des tables de correspondance entre les codes de commandes enregistrés dans des récepteurs commandant des équipements électriques et les actions associées à ces codes.

Le tableau 3 est un exemple de table de correspondance entre le code de commande et l'action provoquée, pour un récepteur d'ordres commandant un éclairage à deux luminaires L1 et L2.

**Tableau 3**

| Code de commande | Action |
|---|---|
| C00 | Allumer L1 |
| C01 | Eteindre L1 |
| C02 | Allumer L2 |
| C03 | Eteindre L2 |
| C04 | Augmenter intensité L1 |
| C05 | Diminuer intensité L1 |
| C06 | Augmenter intensité L2 |
| C07 | Diminuer intensité L2 |
| C08 | Coupler L1 L2 |
| C09 | Dissocier L1 L2 |
| C10 | Enregistrer état L1 L2 |

Cette table est conçue par le fabricant de récepteurs d'ordres, préférentiellement en collaboration avec ses confrères et avec les fabricants d'émetteurs d'ordres. Elle regroupe si possible tous les ordres possibles exécutables par les actionneurs relatifs à un même métier. Il s'agit au moins d'un document papier : elle n'a pas à être implantée en totalité dans les récepteurs.

Un produit donné n'exécute pas forcément l'ensemble des commandes ainsi cataloguées. Par exemple, un produit simple d'éclairage à un luminaire peut très bien ne reconnaître et n'exécuter que les commandes C00 à C03 permettant uniquement le pilotage en tout ou rien. Un produit plus perfectionné exécute les commandes C00 à C07, permettant également le fonctionnement en gradateur, tandis qu'un produit encore plus élaboré permet également l'enregistrement de l'état d'alimentation des luminaires sous forme d'un élément de scénario d'éclairage.

Le tableau 4 représente de même une liste de codes de commandes relatifs à un actionneur pour protection solaire. On distingue trois commandes de montée, de descente et d'arrêt.

**Tableau 4**

| Code de commande | Action |
|---|---|
| C50 | Montée |
| C51 | Arrêt |
| C52 | Descente |
| C53 | Montée lente |
| C54 | Arrêt |
| C55 | Descente lente |
| C56 | Réglage point haut |
| C57 | Réglage point bas |

Selon les accords d'harmonisation entre fabricants, il peut être préférable de distinguer les codes de commande selon les produits à commander, comme représenté sur cette figure, ou encore de donner une signification différente aux codes de commande, selon la nature du produit concerné.

Dans le tableau 5, un même code commande est interprété de manière différente selon qu'il s'agit d'un récepteur d'ordres pour commander une protection solaire ou un éclairage.

**Tableau 5**

| Code de commande | Action | Action |
|---|---|---|
| C00 | Montée | Allumer L1 |
| C01 | Arrêt | Eteindre L1 |
| C02 | Descente | Allumer L2 |
| C03 | x | Eteindre L2 |
| C04 | Montée lente | Augmenter intensité L1 |
| C05 | Arrêt | Diminuer intensité L1 |
| C06 | Descente lente | Augmenter intensité L2 |
| C07 | x | Diminuer intensité L2 |
| C08 | Réglage point haut | Coupler L1 L2 |
| C09 | Réglage point bas | Dissocier L1 L2 |
| C10 | Programmation | Enregistrer état L1 L2 |

Enfin, on prévoit, pour un récepteur d'ordres pilotant un actionneur de type donné, une table de correspondance entre les codes de commandes et les codes d'ergonomie, ceci pour chaque sous-ensemble d'ergonomies prévu précédemment. Un exemple d'une telle table est représenté au tableau 6 pour un récepteur d'ordres commandant un dispositif à deux luminaires et au tableau 7 pour un récepteur d'ordres commandant un élément de protection solaire.

**Tableau 6**

| Code d'ergonomie | Sous-ensemble d'ergonomies | | |
|---|---|---|---|
| | ES1 | ES3 | ES5 |
| E(00) | C00 | C00 | C00 |
| E(01) | C01 | C01 | C01 |
| E(02) | C02 | C02 | C02 |
| E(03) | C03 | C03 | C03 |
| E(04) | x | C04 | C04 |
| E(05) | x | C05 | C05 |
| E(06) | x | C06 | C06 |
| E(07) | x | C07 | C07 |
| E(08) | x | x | C08 |
| E(09) | x | x | C10 |
| E(10) | x | x | C09 |

**Tableau 7**

| Code d'ergonomie | Sous-ensemble d'ergonomies | | |
|---|---|---|---|
| | ES0 | ES2 | ES4 |
| E(00) | C00 | C00 | C00 |
| E(01) | C01 | C01 | C01 |
| E(02) | C02 | C02 | C02 |
| E(03) | x | x | x |
| E(04) | x | C04 | C04 |
| E(05) | x | C05 | C05 |
| E(06) | x | C06 | C06 |
| E(07) | x | x | x |
| E(08) | C08 | C08 | C08 |
| E(09) | C09 | C09 | C09 |
| E(10) | x | x | C10 |

Il s'agit encore, dans sa version complète, d'une table papier. Un récepteur donné n'est pas censé intégrer tous les cas possibles. Comme déjà présenté, un luminaire simple ne comprend que la colonne ES1. Il comprend à la fois ES1 et ES3 s'il est plus performant, les colonnes ES1-ES3-ES5 s'il l'est davantage encore. Il peut cependant intégrer systématiquement tous les cas possibles, la sélection d'une configuration étant alors faite par le constructeur à l'aide de contacts sécables sur le circuit imprimé ou d'un code mémoire téléchargeable dans un mode particulier de configuration ou par tout autre moyen connu de l'homme du métier.

De même, dans le cas du récepteur pilotant un équipement de protection solaire, un récepteur simple ne comprend que la colonne ES0. Il comprend à la fois ES0 et ES2 s'il est plus performant et les colonnes ES0-ES2-ES4 s'il l'est davantage encore.

On remarque que tous ces produits incluent ici une commande C08 et C09 de réglage et de mise en mémoire des positions de fins de course du produit, alors que le problème d'un réglage de ce type ne se pose pas dans le cas de dispositifs d'éclairage. Chaque métier peut ainsi introduire dans cette table des codes de commandes correspondant à des contraintes spécifiques.

On remarque enfin qu'il n'y a, a priori, aucun rapport entre l'ordre des codes de commandes et l'ordre des ergonomies. Un souci d'efficacité peut conduire les fabricants à classer les commandes selon un ordre proche de celui des ergonomies associées : c'est d'ailleurs ce qui a été fait ici. Mais la lecture du bas de la colonne ES5 dans le tableau 6 montre bien la possibilité de tout croisement pour associer un code de commande donné à une ergonomie donnée.

Ces tables sont parfaitement représentatives du principe du procédé de configuration selon l'invention. Elles permettent d'établir une correspondance entre un code d'ergonomie et un code de commande d'une part, et entre un code de commande et une action d'autre part. Ainsi, ces tables permettent d'établir une relation entre un code d'ergonomie et une action sur l'équipement commandé.

On prend l'exemple du récepteur intermédiaire pour décrire comment peut. être implantée et utilisée une telle table dans le cas d'un équipement de protection solaire.

Au sein de la mémoire du récepteur d'ordres, la table s'écrit en transposant les lignes et les colonnes:
ES0 : C00, C01, C02, 000, 000, 000, 000, 000, C08, C09, 000, 000
ES2 : C00, C01, C02, 000, C04, C05, C06, 000, C08, C09, 000, 000

La table peut être également conçue comme une matrice comportant autant de lignes que de sous-ensembles répertoriés et autant de colonnes que de commandes répertoriées. Toutes les commandes non implantées figurent alors sous la forme d'un contenu nul (000) dans cette matrice. Ce n'est pas le moyen le plus convenable pour réduire les dimensions de la mémoire, mais tout moyen connu de l'homme du métier peut permettre le stockage de cette information.

Un premier mode d'exécution du procédé selon l'invention est représenté sous la forme d'un ordinogramme à la figure 4.

Lors de la mise sous tension du récepteur d'ordres 10, celui-ci active un programme 50 d'attente de réception d'une information relative aux ergonomies disponibles sur l'émetteur d'ordres 20.

Lors de son premier branchement, l'émetteur d'ordres 20 active un programme 30 de détection d'appui sur les touches du clavier 24.

La première action de l'utilisateur sur l'émetteur d'ordres 20 est symbolisée par la flèche A11. Il s'agit de l'appui sur une touche du clavier 24. Quel que soit cet appui, l'émetteur 20 active un programme 32 de reconnaissance de l'ergonomie activée, de lecture soit en mémoire, soit sur un circuit d'entrée du microcontrôleur, d'une information relative au sous-ensemble des ergonomies disponibles sur cet émetteur 20, puis de transmission de cette information vers le récepteur d'ordres 10, accompagnée du code de l'ergonomie effectuée.

Cette transmission est représentée par la flèche T11. A réception de cette information et du code de l'ergonomie effectuée, le récepteur d'ordres 10 active un programme facultatif 51 d'enregistrement du sous-ensemble d'ergonomies sélectionné et/ou de limitation de droits, qui sera détaillé plus loin.

Enfin, le récepteur d'ordres 10 active un programme 53 de recherche dans sa mémoire de données 16 du code de commande correspondant au code d'ergonomie reçu. En reprenant les exemples précédents, si à la suite de la transmission T11 le récepteur d'ordres 10 reçoit de l'émetteur d'ordres 20 l'information « ES0 », puis le code d'ergonomie E02, il lit alors dans la table, la commande: C02. Puis, le récepteur 10 active un programme 55 d'exécution de cette commande. Par contre, ce récepteur n'exécute aucune commande s'il reçoit le code d'ergonomie E03, provenant du même émetteur d'ordres 20.

Ainsi, par lecture dans la table de correspondance, la combinaison d'une information de sous-ensemble d'ergonomie et d'un code d'ergonomie permet donc au récepteur d'ordres 10 de déterminer la commande à exécuter.

L'information sur le sous-ensemble d'ergonomies sélectionné dans cet émetteur d'ordres est seulement transmise lors de la première transmission : elle est enregistrée par le programme 51 dans le récepteur d'ordres 10 en l'affectant à l'émetteur (si le récepteur est susceptible de recevoir des ordres de plusieurs émetteurs, car il doit pouvoir mémoriser l'information d'ergonomie propre à chacun d'eux).

Lors d'une nouvelle action sur l'émetteur 10, représentée par la flèche A12, il suffit que le programme 34 reconnaisse l'ergonomie activée et la transmette vers le récepteur lors de la transmission T12 et que le récepteur active les programmes 53 et 55.

Une variante d'exécution consiste à activer l'ensemble des programmes 32, 51, 53 et 55 au lieu des seuls programmes 34, 53 et 55 lors de chaque action suivante sur l'émetteur.

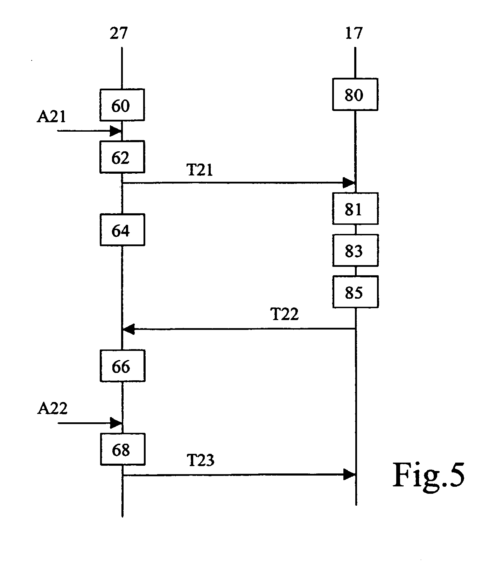

Un deuxième mode d'exécution du procédé selon l'invention est représenté sous la forme d'un ordinogramme à la figure 5.

Lors de la mise sous tension du récepteur d'ordres 10, celui-ci active un programme 80 d'attente de réception.

Lors de son premier branchement, l'émetteur d'ordres 27 active un programme 60 de détection d'appui sur les touches du clavier 24.

La première action de l'utilisateur sur l'émetteur d'ordres 27 est symbolisée par la flèche A21. Il s'agit de l'appui sur une touche du clavier 24. Quel que soit cet appui, l'émetteur 27 active un programme 62 de lecture soit en mémoire, soit sur un circuit d'entrée du microcontrôleur, d'une information relative au sous-ensemble des ergonomies disponibles sur ce circuit, puis de transmission de cette information vers le récepteur d'ordres.

Cette première étape de transmission est indiquée par la flèche T21. L'émetteur 27 active alors un programme 64 d'attente de réception de liste de commandes.

A réception de cette information, le récepteur d'ordres 17 active un programme facultatif 81 d'accusé de réception par émission d'un signal. Il s'agit d'un signal visuel ou audible, par exemple émis à l'aide de l'actionneur 15 commandé par le récepteur 17. Il s'agit de préférence d'un clignotement du luminaire ou d'un bref mouvement d'aller et retour du store.

De nouveau de manière facultative, le récepteur active un programme 83 de limitation de droits, qui sera détaillé plus loin.

Enfin, le récepteur d'ordres 17 active un programme 85 de recherche dans sa mémoire de données de la liste des codes de commandes relatives au sous-ensemble d'ergonomies correspondant à l'information reçue et de transmission de cette liste vers l'émetteur 27. Cette transmission est représentée par la flèche T22.

A réception, l'émetteur 27 active un programme 66 d'enregistrement de la liste des codes de commandes dans la mémoire 25. De manière simple, cet enregistrement en mémoire se fait dans l'ordre reçu, qui est aussi l'ordre de la liste des ergonomies. La table des relations entre ergonomies et commandes est ainsi constituée dans l'émetteur 27.

En reprenant les exemples précédents, si à la suite de l'étape de transmission T21, le récepteur d'ordres 17 reçoit de l'émetteur 27 l'information « ES0 », alors le récepteur 17 transmet à l'émetteur une « page de données » correspondant à la succession des codes de commandes indiqués sur la ligne ES0. A réception, l'émetteur d'ordres 27 enregistre, de manière permanente, la relation entre chacune de ses ergonomies et la commande correspondante que lui a fournie le récepteur 17.

Lors d'une nouvelle action sur une touche du clavier 24, représentée par la flèche A22, il y a activation d'un programme 68 de reconnaissance de la touche et/ou de la combinaison de touches et de la durée d'appui, donc de l'ergonomie. Ce programme lit le code de commande correspondant dans la table stockée dans l'émetteur, puis la transmet vers le récepteur 17. Cette transmission est représentée par la flèche T23.

Si les transmissions T21 et T22 et l'exécution des programmes associés se déroulent de manière suffisamment rapide, on peut se passer du programme 81 d'envoi d'un accusé de réception et de l'action A22 : la commande envoyée par la transmission T23 est alors directement celle correspondant à l'action A21.

Par la suite, toute nouvelle action A22 active un programme 68 qui recherche dans la mémoire 25 le code de commande correspondant à l'ergonomie activée et provoque l'émission de ce code de commande par la transmission T23.

Pour permettre des effets de gamme, on peut aussi concevoir qu'un équipement électrique élaboré exécute certaines commandes simples sur réception d'ordres de la part d'émetteurs d'ordres de tout modèle, mais n'accepte d'exécuter des commandes élaborées que de la part d'émetteurs d'ordres de certains modèles seulement. La différenciation peut aussi porter sur différentes marques d'un même fabricant ou d'un groupe de fabricants coopérant à la mise en oeuvre d'un tel protocole de partage et de diffusion d'ergonomies et de commandes.

La fonction du programme 51 dans le premier mode d'exécution et du programme 83 dans le second mode d'exécution est de permettre une sélection de gamme.

Par exemple, un émetteur d'ordres utilisé est validé par son fabricant FA comme possédant le sous-ensemble d'ergonomie ES5. Il est reconnu comme tel par tous les récepteurs d'ordres de produits réalisés par le même fabricant FA ou par des fabricants coopérant avec FA. Par contre, le fabricant FA conserve la possibilité de donner un avantage concurrentiel à ses propres produits (ou ceux de ses partenaires) vis-à-vis de produits provenant de fabricants différents des précédents, tout en laissant à ces derniers un caractère suffisant pour les fonctions de base. Les programmes 51 et 83 procèdent à la lecture du code fabricant dans la trame de données transmise. Ils laissent donc inchangée l'information de sous-ensemble d'ergonomie s'il s'agit du fabricant FA et décalent au moins d'un cran cette information (par exemple en la transformant en ES3) dans le cas contraire.

La mise en oeuvre logicielle du procédé est réalisée en pratique pour permettre, par ailleurs, les commandes d'appariement ou de réglage qui ne sont pas décrites ici.

L'information de sous-ensemble des ergonomies disponibles sur l'émetteur d'ordres peut être un code spécifique contenu dans une mémoire de l'émetteur mais peut, de manière plus générale, consister en toute information permettant d'identifier un type d'émetteur d'ordres, telle qu'une référence, un nom ou une marque.

## Revendications

1. Procédé de configuration d'un dispositif de commande d'un équipement (15) électrique de protection et/ou de confort dans un bâtiment, le dispositif de commande comprenant un émetteur d'ordres (20 ; 27) et un récepteur d'ordres (10 ; 17) pilotant l'équipement (15), dans lequel une ergonomie est définie comme étant une manipulation d'une ou plusieurs touches d'un clavier de l'émetteur d'ordres selon une séquence et/ou une durée déterminée, l'émetteur d'ordres permettant à un utilisateur d'envoyer un ordre vers le récepteur d'ordres, **caractérisé en ce qu'**il comprend les étapes suivantes :
- envoyer de l'émetteur d'ordres (20 ; 27) au récepteur d'ordres (10 ; 17) une information relative aux ergonomies disponibles sur l'émetteur d'ordres (20 ; 27), dite information de sous-ensemble des ergonomies, au moins lors de la première communication entre l'émetteur d'ordres (20 ; 27) et le récepteur d'ordres (10 ; 17),
- sélectionner dans une mémoire (16) du récepteur d'ordres (10 ; 17), grâce à l'information de sous-ensemble des ergonomies, une liste de commandes correspondant aux ergonomies de l'émetteur d'ordres (20 ; 27) et permettant de traduire les ergonomies de l'émetteur d'ordres (20 ; 27) en des commandes exécutables par l'équipement (15).

2. Procédé de commande comprenant les étapes du procédé de configuration selon la revendication 1, **caractérisé en ce qu'**il comprend en plus les étapes suivante :
- envoyer de l'émetteur d'ordres (20 ; 27) au récepteur d'ordres (10 ; 17) une information relative à une ergonomie,
- exécuter, en utilisant la liste de commandes, la commande correspondant à cette ergonomie.

3. Procédé de configuration selon la revendication 1, **caractérisé en ce qu'**il comprend en plus les étapes suivante :
- envoyer du récepteur d'ordres (17) à l'émetteur d'ordres (27) la liste de commandes,
- enregistrer la liste de commandes dans une mémoire (25) de l'émetteur d'ordres (27).

4. Procédé de configuration selon la revendication 3, **caractérisé en ce qu'**il comprend en plus l'étape suivante :
- émettre par le biais du récepteur d'ordres (17) un signal d'accusé de réception.

5. Dispositif de commande d'un équipement électrique de protection et/ou de confort dans un bâtiment, dans lequel une ergonomie est définie comme étant une manipulation d'une ou plusieurs touches d'un clavier d'un émetteur d'ordres selon une séquence et/ou une durée déterminée, **caractérisé en ce qu'**il comprend
l'émetteur d'ordres (20 ; 27) contenant au moins une information relative aux ergonomies disponibles et comprenant des moyens (21, 22) d'émission d'un signal, une unité logique de traitement (23) et le clavier (24),
un récepteur d'ordres (10 ; 17) commandant un équipement (15) et comprenant des moyens (11, 12) de réception d'un signal, une unité logique de traitement (13), une mémoire (16) et un actionneur (14), l'émetteur d'ordres permettant à un utilisateur d'envoyer un ordre vers le récepteur d'ordres,
un moyen pour envoyer de l'émetteur d'ordres (20 ; 27) au récepteur d'ordres (10 ; 17) une information relative aux ergonomies disponibles sur l'émetteur d'ordres (20 ; 27), dite information de sous-ensemble des ergonomies, au moins lors de la première communication entre l'émetteur d'ordres (20 ; 27) et le récepteur d'ordres (10 ; 17) et
un moyen pour sélectionner dans la mémoire (16) du récepteur d'ordres (10 ; 17), grâce à l'information de sous-ensemble des ergonomies, une liste de commandes correspondant aux ergonomies de l'émetteur d'ordres (20 ; 27) et permettant de traduire les ergonomies de l'émetteur d'ordres (20 ; 27) en des commandes exécutables par l'équipement (15).

6. Dispositif de commande selon la revendication 5, **caractérisé en ce qu'**il comprend un moyen pour envoyer de l'émetteur d'ordres (20 ; 27) au récepteur d'ordres (10 ; 17) une information relative à une ergonomie et un moyen pour exécuter, en utilisant la liste de commandes, la commande correspondant à cette ergonomie.

7. Dispositif de commande selon la revendication 5, **caractérisé en ce que** :
l'émetteur d'ordres (27) comprend des moyens de réception d'un signal et une mémoire (25),
le récepteur d'ordres (17) comprend des moyens (18) de réception d'un signal,
le dispositif de commande comprend un moyen pour envoyer du récepteur d'ordres (17) à l'émetteur d'ordres (27) la liste de commandes et un moyen pour enregistrer la liste de commandes dans la mémoire (25) de l'émetteur d'ordres (27).

8. Dispositif de commande selon la revendication 7, **caractérisé en ce qu'**il comprend un moyen pour émettre par le biais du récepteur d'ordres (17) un signal d'accusé de réception.

## Claims

1. Method for configuring a control device of an electric equipment (15) for the protection and/or comfort of a building, said control device including a command transmitter (20; 27) and a command receiver (10; 17) driving the equipment (15), wherein an action is defined as an actuation of one or more keys on a keyboard of the command transmitter according to a determined sequence and/or duration, the command transmitter allowing a user to sending a command to the command receiver, **characterised in that** the method includes the following steps:
- sending from the command transmitter (20; 27) to the command receiver (10; 17) an information regarding the actions available in the command transmitter (20; 27) called actions sub-group information, at least during the first communication between the command transmitter (20; 27) and the command receiver (10; 17),
- selecting from a memory (16) of the command receiver (10; 17) and based on the actions sub-group information, a list of controls corresponding to the actions on the command transmitter (20; 27) and allowing to translate the actions on the command transmitter (20; 27) into controls to be executed by the equipment (15).

2. Control method, including the steps of the configuration method according to claim 1, **characterised in that** it further comprises the following steps:
- sending an information regarding an action from the command transmitter (20; 27) to the command receiver (19; 17),
- executing the control corresponding to that action using the list of controls.

3. Method for configuring according to claim 1, **characterised in that** it further includes the following steps:
- sending the list of controls from the command receiver (17) to the command transmitter (27),
- recording the list of controls in the memory (25) of the command transmitter (27).

4. Method for configuring according to claim 3, **characterised in that** it further includes the following step:
- transmitting a reception acknowledgement signal by means of the command receiver (17).

5. Device for controling an electric equipment for the protection and/or comfort of a building, wherein an action is defined as an actuation of one or more keys on a keyboard of a command transmitter according to a determined sequence and/or duration, **characterised in that** it includes:
- the command transmitter (20; 27) comprising at least one information regarding the available actions and including means (21, 22) for transmitting a signal, a logical processing unit (23), and the keyboard (24),
- a command receiver (10; 17) controlling an equipment (15) and comprising means (11, 12) for receiving a signal, a logical processing unit (13), a memory (16) and an actuator (14), the command transmitter allowing a user to sending a command to the command receiver,
- a means for sending from the command transmitter (20; 27) to the command receiver (10; 17) an information regarding the actions available in the command transmitter (20; 27) called actions sub-group information, at least during the first communication between the command transmitter (20; 27) and the command receiver (10; 17), and
- a means for selecting from a memory (16) of the command receiver (10; 17) and based on the actions sub-group information, a list of controls corresponding to the actions on the command transmitter (20; 27) and allowing to translate the actions on the command transmitter (20; 27) into controls to be executed by the equipment (15).

6. Control device according to claim 5, **characterised in that** it includes a means for sending an information regarding an action from the command transmitter (20; 27) to the command receiver (10; 17), and a means for executing the control corresponding to that action using the list of controls.

7. Control device according to claim 5, **characterised in that**:
- the command transmitter (27) comprises means for receiving a signal, and a memory (25),
- the command receiver (17) comprises means (18) for receiving a signal,
- the control device includes a means for sending the control list from the command receiver (17) to the command transmitter (27), the control list, and a means for recording the control list in the memory (25) of the command transmitter (27).

8. Control device according to claim 7, **characterised in that** it includes a means for transmitting a reception acknowledgement signal via the command receiver (17).

## Patentansprüche

1. Verfahren zum Konfigurieren einer Vorrichtung zur Steuerung einer elektrischen Anlage (15) zur Sicherung und/oder zum Komfort in einem Gebäude, wobei die Steuervorrichtung einen Befehlssender (20; 27) und einen Befehlsempfänger (10; 17) aufweist, die die Anlage steuern, und bei dem eine Ergonomie als Betätigung einer oder mehrerer Tasten einer Tastatur am Befehlssender in Form einer bestimmten Abfolge und/oder Dauer definiert ist, wobei der Befehlssender dem Benutzer das Senden eines Befehls zum Befehlsempfänger ermöglicht, **dadurch gekennzeichnet, dass** das Verfahren die folgenden Schritte aufweist:
- Absenden einer Information, die als Information einer Untergruppe der Ergonomien bezeichnet wird, vom Befehlssender (20; 27) zum Befehlsempfänger (10; 17) bezüglich der im Befehlssender (20; 27) verfügbaren Ergonomien, wobei diese Information mindestens bei der ersten Kommunikation zwischen dem Befehlssender (20; 27) und dem Befehlsempfänger (10; 17) übermittelt wird,
- Auswahl einer Liste der Befehle, die den Ergonomien des Befehlssenders (20; 27) entsprechen und eine Übersetzung der Ergonomien des Befehlssenders (20; 27) in Befehle ermöglichen, welche die Anlage (15) ausführen kann, aus einem Speicher (16) des Befehlsempfängers (10; 17) auf Grund der Information über die Untergruppe der Ergonomien.

2. Verfahren zur Befehlsausführung, welches die Schritte des Verfahrens zum Konfigurieren nach Anspruch 1 aufweist, **dadurch gekennzeichnet, dass** es die folgenden zusätzlichen Schritte umfasst:
- Absenden einer Information bezüglich einer Ergonomie vom Befehlssender (20; 27) zum Befehlsempfänger (10; 17),
- Ausführung des Befehls, der dieser Ergonomie entspricht, unter Verwendung der Befehlsliste.

3. Verfahren zum Konfigurieren nach Anspruch 1, **dadurch gekennzeichnet, dass** es die folgenden zusätzlichen Schritte umfasst:
- Absenden der Befehlsliste vom Befehlsempfänger (17) zum Befehlssender (27),
- Speichern der Befehlsliste in einem Speicher (25) des Befehlssenders (27).

4. Verfahren zum Konfigurieren nach Anspruch 3, **dadurch gekennzeichnet, dass** es den folgenden zusätzlichen Schritt umfasst:
- Absenden eines Empfangsbestätigungssignals durch den Befehlsempfänger (17).

5. Vorrichtung zur Steuerung einer elektrischen Anlage zur Sicherung und/oder zum Komfort in einem Gebäude, bei welcher eine Ergonomie als Betätigung einer oder mehrerer Tasten einer Tastatur an einem Befehlssender gemäss einer bestimmten Abfolge und/oder Dauer definiert ist, **dadurch gekennzeichnet, dass** die Vorrichtung aufweist:
- den Befehlssender (20; 27) mit mindestens einer Information bezüglich der verfügbaren Ergonomien und mit Mitteln (21, 22) zum Absenden eines Signals, mit einer Logik-Verarbeitungseinheit (23) und mit der Tastatur (29),
- einen Befehlsempfänger (10; 17), der eine Anlage (10) steuert und welcher Mittel (11, 12) zum Empfang eines Signals, eine Logik-Verarbeitungseinheit (13, einen Speicher (16) und eine Antriebseinrichtung (14) aufweist, wobei der Befehlssender einem Benutzer das Absenden eines Befehls an den Befehlsempfänger ermöglicht,
- ein Mittel zum Senden einer Information bezüglich der im Befehlssender verfügbaren Ergonomien, welche als Untergruppe der Ergonomien bezeichnet wird, vom Befehlssender (20; 27) zum Befehlsempfänger (19; 17), und zwar zumindest bei der ersten Kommunikation zwischen dem Befehlssender (20; 27) und dem Befehlsempfänger (10; 17), und
- ein Mittel zur Auswahl einer Liste der Befehle, die den Ergonomien des Befehlssenders (20; 27) entsprechen und eine Übersetzung der Ergonomien des Befehlssenders (20; 27) in Befehle ermöglichen, welche die Anlage (15) ausführen kann, aus einem Speicher (16) des Befehlsempfängers (10; 17) auf Grund der Information über die Untergruppe der Ergonomien.

6. Vorrichtung zur Steuerung nach Anspruch 5, **dadurch gekennzeichnet, dass** sie ein Mittel zum Absenden einer Information bezüglich einer Ergonomie vom Befehlssender (20; 27) zum Befehlsempfänger (10; 17) sowie ein Mittel zur Ausführung des Befehls, welcher dieser Ergonomie entspricht, unter Verwendung der Befehlsliste umfasst.

7. Vorrichtung zur Steuerung nach Anspruch 5, **dadurch gekennzeichnet, dass**
- der Befehlssender (27) Mittel zum Empfang eines Signals sowie einen Speicher (25) enthält,
- der Befehlsempfänger (17) Mittel (18) zum Empfang eines Signals aufweist,
- die Steuervorrichtung ein Mittel zum Senden der Befehlsliste vom Befehlsempfänger (17) zum Befehlssender (27), sowie ein Mittel zum Speichern der Befehlsliste im Speicher (25) des Befehlssenders (27),

8. Vorrichtung zur Steuerung nach Anspruch 7, **dadurch gekennzeichnet, dass** sie ein Mittel zum Absenden eines Signals zur Empfangsbestätigung durch den Befehlsempfänger (17) aufweist.
